# EUROPEAN PATENT SPECIFICATION

(11) **EP 3 125 604 B1**
(45) Date of publication and mention of the grant of the patent: **24.08.2022**
(21) Application number: 14886857.3
(22) Date of filing: 19.05.2014
(51) Int. Cl.: H04W 28/12, H04W 48/18, H04L 67/303, H04W 28/08, H04W 92/20, H04L 47/12

(54) **LOAD INFORMATION TRANSFER METHOD, NETWORK ELEMENTS AND COMPUTER STORAGE MEDIUM**
LAST INFORMATIONSÜBERTRAGUNGSVERFAHREN, NETZWERKELEMENTE UND COMPUTERSPEICHERMEDIUM
PROCÉDÉ DE TRANSFERT D'INFORMATIONS DE CHARGE, ÉLÉMENTS DE RÉSEAU ET SUPPORT DE STOCKAGE INFORMATIQUE

(30) Priority: 26.03.2014 CN 201410116845
(43) Date of publication of application: 01.02.2017
(73) Proprietor: ZTE Corporation, Shenzhen City, Guangdong Province 518057 (CN)
(72) Inventor: GAO, Yin, Shenzhen Guangdong 518057 (CN); SUN, Bo, Shenzhen Guangdong 518057 (CN); YANG, Li, Shenzhen Guangdong 518057 (CN); XIE, Feng, Shenzhen Guangdong 518057 (CN)
(74) Representative: Lavoix
(86) International application number: PCT/CN2014/077832
(87) International publication number: WO 2015/143763

(56) References cited:
- WO-A1-2014/026324
- CN-A- 101 959 241
- CN-A- 102 131 237
- CN-A- 102 131 237
- CN-A- 102 572 950
- CN-A- 103 517 337
- CN-A- 103 517 337
- US-A1- 2013 163 463

## Description

### TECHNICAL FIELD

The present disclosure relates to the technical field of radio access, and in particular to a method and a network element for load information transfer, and a computer storage medium.

### BACKGROUND

The mobile Internet industry is an industry which is developed most rapidly and has the greatest market potential and the broadest prospect in the world, and a radio access technology is a core technology of the mobile Internet industry. At present, multiple advanced Multiple Radio Access Technologies (Multi-RATs) coexist, which enable a user terminal to access a wireless network at a high speed and enjoy high-quality service, wherein typical radio access technologies include a wireless wide area network access technology represented by a Long Term Evolution (LTE) technology and a Wireless Local Area Network (WLAN) access technology represented by Institute of Electrical and Electronic Engineers (IEEE) 802.11. A WLAN is a network established within a certain local range by virtue of a wireless communication technology. Compared with an LTE network, the WLAN has narrow coverage, high access rate and low cost in use.

Along with continuous evolution of a future communication network, coexistence of network modes under various radio access technology standards is an inevitable trend, including 2nd-Generation, 3rd-Generation and LTE integration networking, 3rd Generation Partnership Project-WLAN (3GPP-WLAN) integration networking and the like.

A crucial problem is how to select the most proper access network and guarantee a requirement of a user terminal on Quality of Service (QoS) under a condition of coexistence of Multi-RATs. In a conventional method for network selection, a user terminal selects a network with higher pilot signal strength or higher quality to access. However, loads of networks are not considered in the method. QoS of either an LTE network or a WLAN cannot be guaranteed even though the received signal strength of the LTE or WLAN is high, if the load of the network has been saturated.

WO 2014/026324 A1 discloses systems and methods for facilitating handover and reselection between networks using different radio access technologies, which that enable dissimilar radio access networks (RANs) to exchange loading information that may be used to determine reselection criteria for mobile terminals and/or classes of mobile terminals.

### SUMMARY

The embodiments of the present disclosure are intended to provide a load information transfer method and system, a network element and a computer storage medium, which implement load information transmission between network elements under different radio access technology standards.

The present disclosure is set out in the appended set of claims.

According to the load information transfer method, the network element and the computer storage medium provided by the embodiments of the present disclosure, the first network element sends own load information to the second network element actively or according to a request of the second network element. In such a manner, load information interaction between network elements under different radio access technology standards is implemented under a condition of coexistence of Multi-RATs, so that comprehensive management over all network resources is implemented on the basis of an existing network selection method for a user terminal in combination with comprehensive analysis about load information of each network element, the most proper access network is selected for the user terminal, a requirement of the user terminal on QoS is guaranteed, and moreover, the effect of optimizing an overall network load is achieved.

### BRIEF DESCRIPTION OF THE DRAWINGS

Fig. 1 is a first flowchart of a load information transfer method according to at least one embodiment of the present disclosure;
Fig. 2 is a second flowchart of a load information transfer method according to at least one embodiment of the present disclosure;
Fig. 3 is a third flowchart of a load information transfer method according to at least one embodiment of the present disclosure;
Fig. 4 is a fourth flowchart of a load information transfer method according to an example;
Fig. 5 is a fifth flowchart of a load information transfer method according to an example;
Fig. 6 is a sixth flowchart of a load information transfer method according to an example;
Fig. 7 is a seventh flowchart of a load information transfer method according to an example;
Fig. 8 is a basic structure diagram of a load information transfer system according to at least one embodiment of the present disclosure;
Fig. 9 is a first basic structure diagram of a network element according to at least one embodiment of the present disclosure; and
Fig. 10 is a second basic structure diagram of a network element according to an example.

### DETAILED DESCRIPTION

In the embodiments of the present disclosure, a first network element sends own load information to a second network element actively or according to a request of the second network element.

The present disclosure will be further described below with reference to the drawings and specific embodiments in detail.

### Embodiment 1

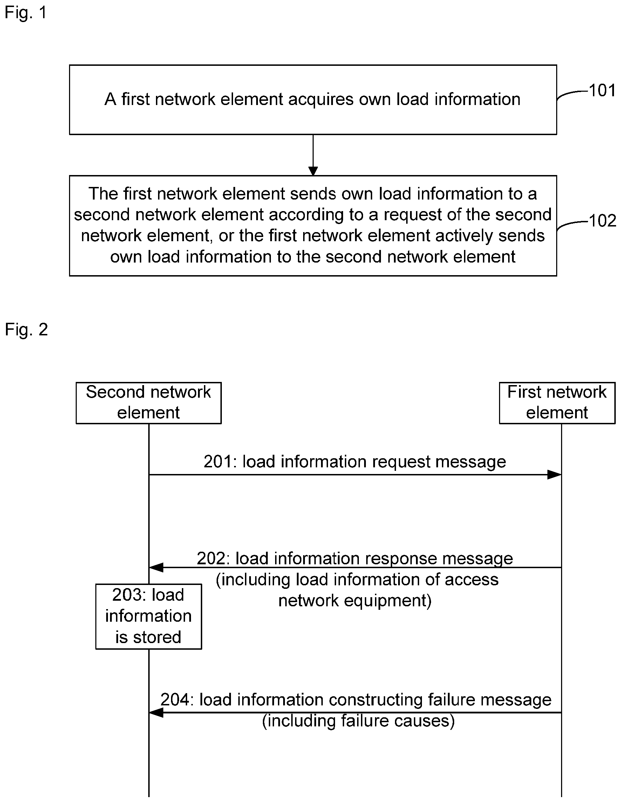

Embodiment 1 of the present disclosure provides a load information transfer method. Fig. 1 is a first flowchart of a load information transfer method according to at least one embodiment of the present disclosure. As shown in Fig. 1, the method includes the following steps:
Step 101: a first network element acquires own load information; and
Step 102: the first network element sends own load information to a second network element according to a request of the second network element, or the first network element actively sends own load information to the second network element; wherein the second network element is a 3GPP network element when the first network element is a WLAN network element; the second network element is a WLAN network element when the first network element is a 3GPP network element.

The first network element and second network element in the embodiment of the present disclosure refer to two network elements under different radio access technology standards. The first network element is a WLAN network element, specifically, being an Access Point (AP),an Access Controller (AC), or an independent equipment unit; the second network element is a 3GPP network element, specifically being an Evolved Node B (eNB) in an LTE system, a Radio Network Controller (RNC) in a Universal Mobile Telecommunications System (UMTS), a Base Station Controller (BSC) in a Global System for Mobile Communications (GSM), or an independent equipment unit. On the contrary, the first network element surely may be a 3GPP network element, and the second network element surely may be a WLAN network element.

Specifically, the load information mentioned here refers to information capable of reflecting a system load condition of a network where the first network element is located. For example, for a 3GPP network element, the load information in an LTE system may be an overall available resource level of an LTE cell, including a downlink overall available resource level and an uplink overall available resource level, wherein overall available resource level here is represented by a cell capacity level value or a capacity value. The load information in a UMTS Terrestrial Radio Access Network (UTRAN) system may be a load level of a UTRAN cell, including an uplink load level and a downlink load level, wherein the load level here may be represented by a cell capacity level value, a load value, a real-time service load value or a non-real-time service load value. The load information in a GSM may be a load level of a GSM cell, including an uplink load level and a downlink load level, wherein the load level mentioned here may be represented by a cell capacity level value, a load value, a real-time service load value or a non-real-time service load value. Specifically, the first network element may acquire load information of each piece of access network equipment connected therewith in real time and locally store the load information; when the load information of the access network equipment changes, the first network element may dynamically update the locally stored load information. Here, only one implementation manner for acquiring load information is provided. Other manners may also be adopted for acquiring load information in practical operation, and there are no limits made here.

Load information of an access equipment (AP) in a WLAN is usually represented by at least one of the following information: the number of STAs, a channel utilization and an access capability, wherein the number of the STAs refers to the number of STAs currently connected to a Basic Service Set (BSS); the channel utilization refers to a percentage of rush hours of a channel; and the access capability refers to remaining access time, and access capability information may be used for an STA to select a proper AP to try to accept so as to guarantee a demand for QoS.

However, there has yet not been defined proper load information for cross-system interaction in a WLAN system. Therefore, new load information for cross-system interaction in a WLAN is defined in the embodiment of the present disclosure. Specifically, load information of a WLAN system is represented by an overall available resource utilization and/or load level indication information, wherein the overall available resource utilization is represented by a percentage of available resources; and the load level indication information may be represented by heavy overload indication information, overload indication information or light load indication information. During rough estimation of the load information of the WLAN system, the overall available resource utilization or the load level indication information may be adopted as the load information. During accurate estimation of the load information of the WLAN system, the first network element may send the overall available resource utilization and the load level indication information which both serve as the load information to the second network element.

Specifically, in this step, the first network element may send own load information to the second network element through two mechanisms, one being a request-response mechanism, and the other being a direct notification mechanism.

The load information transfer method provided by embodiment 1 of the present disclosure will be described below with the following examples 1-4 in detail.

### Example 1

Fig. 2 is a flowchart of example 1 according to an embodiment of the present disclosure. The first network element sends load information to the second network element by adopting the request-response mechanism in the example, and the method includes the following steps.

Step 201: the second network element constructs a load information request message, and sends the load information request message to the first network element.

The message for requesting load information includes: information about a source network element, information about a target network element, a request type, information about access network equipment, and the like, wherein the source network element information is one or more IDs capable of uniquely identifying the second network element; the target network element information refers to one or more IDs capable of uniquely identifying the first network element. For example, when the first network element or the second network element is a WLAN network element, a Basic Service Set ID (BSSID) and/or a Service Set ID (SSID) may be adopted as information of the network element, or other equipment ID information such as an Internet Protocol (IP) address and an equipment ID number may be adopted as information of the network element. The request type may be an event-trigger request type or a periodic-trigger request type; when the second network element sets the request type to be the event-trigger request type, the first network element transmits the load information to the second network element when an event requested by the second network element occurs. Specifically, the second network element may request the first network element to transmit the load information of access network equipment to the second network element when the requested access network equipment is heavily overloaded, overloaded or lightly loaded. When the second network element sets the request type to be the periodic-trigger request type, the first network element periodically feeds back the load information to the second network element. The access network equipment information refers to an ID capable of uniquely identifying target access network equipment in the first network element. The second network element may request for load information of one or more pieces of access network equipment connected with the first network element. Therefore, the second network element may contain (an) ID(s) of one or more pieces of access network equipment in the access network equipment information. In such a manner, the first network element receiving the access network equipment information may return load information of the access network equipment corresponding to the ID(s) to the second network element. When the first network element is a WLAN network element, the access network equipment may be an AP, an AC or the like; and when the first network element is a 3GPP network element, the access network equipment may be an eNB, an RN, a BSC or the like.

Step 202: after receiving the load information request message, the first network element constructs a load information response message according to the load information request message, and sends it to the second network element.

The step that the first network element constructs the response message about the load information according to the request message about the load information includes that: the first network element analyzes the load information request message to obtain the request type and the access network equipment information; and the first network element searches for load information of one or more pieces of access network equipment corresponding to (an) access network equipment ID(s) according to the access network equipment ID(s) in the access network equipment information, and encapsulates the found load information of the one or more pieces of access network equipment into the load information response message.

After the load information response message is constructed, the first network element sends the load information response message to the second network element according to the request type in the load information request message. Specifically, if the request type in the load information request message is a periodic-trigger type, the first network element updates the load information of the access network equipment in real time according to a period requested by the second network element, and sends the latest load information of the access network equipment to the second network element; if the request type in the load information request message is the event-trigger type, when the event requested by the second network element occurs, the first network element updates the load information of the access network equipment in real time, and transmits all the load information to the second network element in a list manner; and when the access network equipment information sent by the second network element includes multiple access network equipment IDs, the first network element transmits the load information of multiple pieces of access network equipment corresponding to the multiple access network equipment IDs to the second network element in a list form.

Otherwise, if the first network element has failure in local operation and cannot normally feed back the load information requested by the second network element, step 204 is then executed.

Step 203: the second network element stores the load information in the load information response message after receiving the load information response message.

The load information may be used for subsequent network resource optimization management or network connection strategy optimization between the first network element and the second network element. For example, if it is informed that the first network element is excessively loaded according to the obtained load information, when an air interface transmits an optional first network element measurement list to a user terminal, list optimization is performed, or a signal quality measurement threshold value for handover of the user terminal to the first network element is increased; and the current flow is ended.

Step 204: the first network element returns a load information constructing failure message to the second network element when failing to construct the load information response message, the load information constructing failure message including failure causes under different request types.

Here, there may be multiple causes for a load information constructing failure. For example, a network abnormality, memory overflow, a read-write abnormality and the like may cause a load information acquisition failure, incorrect acquired load information or the like.

### Example 2

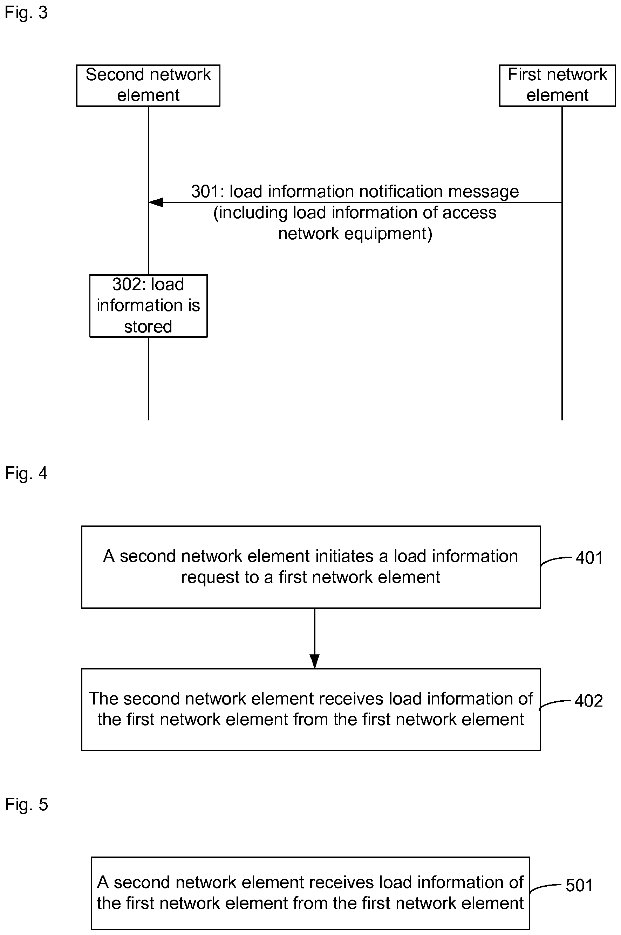

Fig. 3 is a flowchart of example 2 according to an embodiment of the present disclosure. In the example, the first network element directly notifies the second network element of the load information. As shown in Fig. 3, the method includes the following steps.

Step 301: the first network element sends own load information to the second network element.

Specifically, the first network element constructs a load information notification message according to a preset rule, and sends the load information notification message to the second network element according to a preset sending strategy; wherein the load information notification message includes the load information of the first network element.

Specifically, the load information refers to information capable of reflecting a system load condition of a network where the first network element is located. For example, for a 3GPP network element, the load information in an LTE system may be an overall available resource level of an LTE cell, including a downlink overall available resource level and an uplink overall available resource level, wherein the overall available resource level mentioned here is represented by a cell capacity level value or a capacity value; the load information in a UTRAN system may be a load level of a UTRAN cell, including an uplink load level and a downlink load level, wherein the load level mentioned here may be represented by a cell capacity level value, a load value, a real-time service load value or a non-real-time service load value; and the load information in a GSM may be a load level of a GSM cell, including an uplink load level and a downlink load level, wherein the load level mentioned here may be represented by a cell capacity level value, a load value, a real-time service load value or a non-real-time service load value.

Load information of an AP in a WLAN is usually represented by at least one of the following information: the number of STAs, a channel utilization and an access capability, wherein the number of the STAs refers to the number of STAs currently connected to a BSS; the channel utilization refers to a percentage of rush hours of a channel; and the access capability refers to remaining access time, and access capability information may be used for an STA to select a proper AP to try to accept so as to guarantee a demand for QoS.

However, there has yet not been defined proper load information for cross-system interaction in a WLAN system, therefore, new load information used for cross-system interaction of a WLAN is defined in the embodiment of the present disclosure. Specifically, load information of the WLAN system is represented by an overall available resource utilization and/or load level indication information, wherein the overall available resource utilization may be represented by a resource availability percentage; and the load level indication information may be represented by heavy overload indication information, overload indication information or light load indication information. During rough estimation of the load information of the WLAN system, the overall available resource utilization or the load level indication information may be adopted as the load information; and during accurate estimation of the load information of the WLAN system, the first network element may send both the overall available resource utilization and the load level indication information to the second network element as the load information.

Specifically, the preset rule includes: an access network equipment ID. The first network element may send load information of access network equipment corresponding to the preset access network equipment ID to the second network element on the basis of the preset access network equipment ID in the preset rule. Here, one or more access network equipment IDs may be preset, so that the first network element may send load information of one or more pieces of access network equipment to the second network element. The preset sending strategy includes: event-trigger sending and periodic sending. The first network element may send the load information notification message to the second network element in an event triggering manner or a periodic triggering manner on the basis of the preset sending strategy. When the preset sending strategy is event-trigger sending, the first network element transmits the load information to the second network element when a preset event occurs. Specifically, it may be preset that the first network element transmits the load information of the access network equipment to the second network element when the access network equipment corresponding to the access network equipment ID is heavily overloaded, overloaded or lightly loaded. When the preset sending strategy is the periodic triggering manner, the first network element continuously sends the load information to the second network element according to a preset period. Both the preset rule and the preset sending strategy are set according to a practical requirement, specifically, the preset rule and the preset sending strategy may be set according to a local wireless resource management strategy, and the preset rule and the preset sending strategy may also be regulated according to a practical requirement.

Step 302: the second network element, after receiving the load information notification message, locally stores the load information of the first network element contained in the load information notification message, wherein the load information may be used for subsequent network resource optimization management or network connection strategy optimization between the first network element and the second network element. For example, if it is informed that the first network element is excessively loaded according to the obtained load information, when an air interface transmits an optional first network element measurement list to a user terminal, list optimization is performed, or a signal quality measurement threshold for handover of the user terminal to the first network element is increased.

The embodiment of the present disclosure further provides a computer storage medium, in which computer-executable instructions are stored, the computer-executable instructions being for executing the load information transfer method of the embodiment of the present disclosure.

### Example 5

Fig. 4 is a flowchart of a load information transfer method according to example 5, and as shown in Fig. 4, the method includes the following steps.

Step 401: a second network element initiates a load information request to a first network element.

Specifically, the step that the second network element initiates the load information request to the first network element may include that: the second network element constructs a load information request message, and sends the load information request message to the first network element.

Specifically, the load information request message includes: source network element information, target network element information, a request type, access network equipment information and the like, wherein the source network element information is one or more IDs capable of uniquely identifying the second network element, and the target network element information refers to one or more IDs capable of uniquely identifying the first network element. For example, when the first network element or the second network element is a WLAN network element, a BSSID and/or an SSID may be adopted as network element information, or other equipment ID information such as an IP address and an equipment ID number may be adopted as the network element information. The request type may be an event-trigger request type or a periodic-trigger request type. When the second network element sets the request type to be the event-trigger request type, the first network element transmits the load information to the second network element when an event requested by the second network element occurs. Specifically, the second network element may request the first network element to transmit the load information of access network equipment to the second network element when the requested access network equipment is heavily overloaded, overloaded or lightly loaded. When the second network element sets the request type to be the periodic-trigger request type, the first network element periodically feeds back the load information to the second network element. The access network equipment information refers to an ID capable of uniquely identifying target access network equipment in the first network element, and the second network element may request for load information of one or more pieces of access network equipment connected with the first network element, therefore, the second network element may contain (an) ID(s) of one or more pieces of access network equipment in the access network equipment information. In such a manner, the first network element receiving the access network equipment information may return load information of the access network equipment corresponding to the ID(s) to the second network element. When the first network element is a WLAN network element, the access network equipment may be an AP, an AC or the like; and when the first network element is a 3GPP network element, the access network equipment may be an eNB, an RN, a BSC or the like.

Step 402: the second network element receives, from the first network element, load information of the first network element.

Specifically, the second network element receives a load information response message returned by the first network element, and locally stores the load information in the load information response message; and the second network element may receive load information of one or more pieces of access network equipment from the first network element.

Specifically, the load information refers to information capable of reflecting a system load condition of a network where the first network element is located. For example, for a 3GPP network element, the load information in an LTE system may be an overall available resource level of an LTE cell, including a downlink overall available resource level and an uplink overall available resource level, wherein the overall available resource level mentioned here is represented by a cell capacity level value or a capacity value; the load information in a UTRAN system may be a load level of a UTRAN cell, including an uplink load level and a downlink load level, wherein the load level mentioned here may be represented by a cell capacity level value, a load value, a real-time service load value or a non-real-time service load value; and the load information in a GSM may be a load level of a GSM cell, including an uplink load level and a downlink load level, wherein the load level mentioned here may be represented by a cell capacity level value, a load value, a real-time service load value or a non-real-time service load value.

Load information of an AP in a WLAN may usually be represented by at least one of the following information: the number of STAs, a channel utilization and an access capability, wherein the number of the STAs refers to the number of STAs currently connected to a BSS; the channel utilization refers to a percentage of rush hours of a channel; and the access capability refers to remaining access time, and access capability information may be used for an STA to select a proper AP to try to accept so as to guarantee a QoS requirement.

However, there has yet not been defined proper load information for cross-system interaction in a WLAN system, therefore, new load information for cross-system interaction in a WLAN is defined in the example of the present disclosure. Specifically, load information of the WLAN system is represented by an overall available resource utilization and/or load level indication information, wherein the overall available resource utilization may be represented by a resource availability percentage; and the load level indication information may be represented by heavy overload indication information, overload indication information or light load indication information. During rough estimation of the load information of the WLAN system, the overall available resource utilization or the load level indication information may be adopted as the load information; and during accurate estimation of the load information of the WLAN system, the first network element may send both the overall available resource utilization and the load level indication information to the second network element as the load information.

The load information may be for subsequent network resource optimization management or network connection strategy optimization between the first network element and the second network element. For example, if it is informed that the first network element is excessively loaded according to the obtained load information, when an air interface transmits an optional first network element measurement list to a user terminal, list optimization is performed, or a signal quality measurement threshold value for handover of the user terminal to the first network element is increased; and the current flow is ended.

The method may further include that: the second network element receives a load information constructing failure message sent by the first network element, the load information constructing failure message including failure causes under different request types.

Here, there may be multiple causes for a load information constructing failure. For example, a network abnormality, memory overflow, a read-write abnormality and the like may cause a acquisition failure of the load information in the first network element, incorrect acquired load information or the like.

The example 5 further provides a computer storage medium, in which computer-executable instructions are stored for executing the load information transfer method of the example 5.

### Example 6

Fig. 5 is a flowchart of a load information transfer method according to example 6. As shown in Fig. 5, the method includes the following step.

Step 501: a second network element receives load information of a first network element from the first network element.

Specifically, in the example, the load information received by the second network element is transmitted to the second network element by the first network element in an active transmission manner; and the second network element may receive load information of one or more pieces of access network equipment from the first network element.

Specifically, the load information is information capable of reflecting a system load condition of a network where the first network element is located. For example, for a 3GPP network element, the load information in an LTE system may be an overall available resource level of an LTE cell, including a downlink overall available resource level and an uplink overall available resource level, wherein the overall available resource level mentioned here is represented by a cell capacity level value or a capacity value; the load information in a UTRAN system may be a load level of a UTRAN cell, including an uplink load level and a downlink load level, wherein the load level mentioned here may be represented by a cell capacity level value, a load value, a real-time service load value or a non-real-time service load value; and the load information in a GSM may be a load level of a GSM cell, including an uplink load level and a downlink load level, wherein the load level mentioned here may be represented by a cell capacity level value, a load value, a real-time service load value or a non-real-time service load value.

Load information of an AP in a WLAN may usually be represented by at least one of the following information: the number of STAs, a channel utilization and an access capability, wherein the number of the STAs refers to the number of STAs currently connected to a BSS; the channel utilization refers to a percentage of rush hours of a channel; and the access capability refers to remaining access time, and access capability information may be configured for an STA to select a proper AP to try to accept to guarantee a QoS requirement.

However, there has yet not been defined proper load information for cross-system interaction in a WLAN system, therefore, new load information for cross-system interaction in a WLAN is defined in the example of the present disclosure. Specifically, load information of the WLAN system is represented by an overall available resource utilization and/or load level indication information, wherein the overall available resource utilization may be represented by a resource availability percentage; and the load level indication information may be represented by heavy overload indication information, overload indication information or light load indication information. During rough estimation of the load information of the WLAN system, the overall available resource utilization or the load level indication information may be adopted as the load information; and during accurate estimation of the load information of the WLAN system, the first network element may send both the overall available resource utilization and the load level indication information to the second network element as the load information.

The second network element locally stores the load information after receiving the load information; the load information may be used for subsequent network resource optimization management or network connection strategy optimization between the first network element and the second network element. For example, if it is informed that the first network element is excessively loaded according to the obtained load information, when an air interface transmits an optional first network element measurement list to a user terminal, list optimization is performed, or a signal quality measurement threshold value for handover of the user terminal to the first network element is increased; and the current flow is ended.

The example 6 further provides a computer storage medium, in which computer-executable instructions are stored for executing the load information transfer method of the example 6.

### Example 7

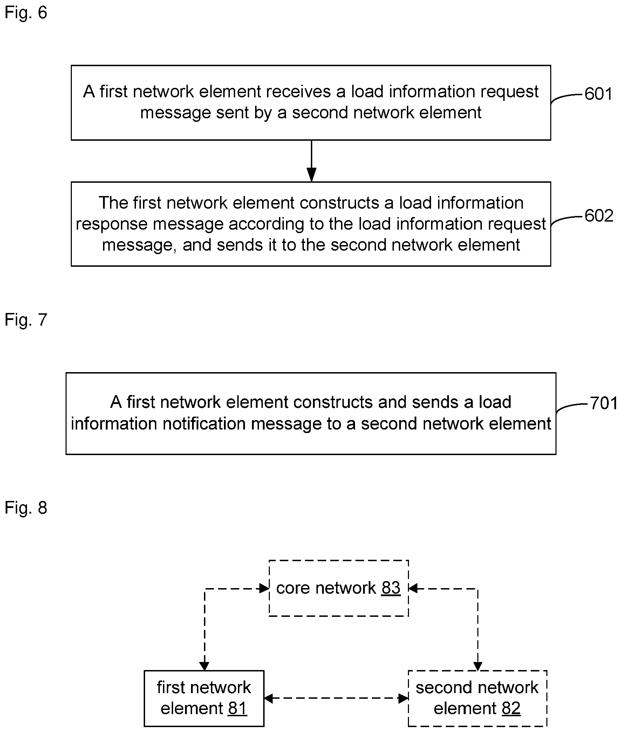

Fig. 6 is a flowchart of a load information transfer method according to example 7, and as shown in Fig. 6, the method includes the following steps.

Step 601: a first network element receives a load information request message sent by a second network element.

Specifically, the load information request message includes: source network element information, target network element information, a request type, access network equipment information and the like, wherein the source network element information is one or more IDs capable of uniquely identifying the second network element; and the target network element information refers to one or more IDs capable of uniquely identifying the first network element. For example, when the first network element or the second network element is a WLAN network element, a BSSID and/or an SSID may be adopted as network element information, or other equipment ID information such as an IP address and an equipment ID number may be adopted as the network element information. The request type may be an event-trigger request type or a periodic-trigger request type. When the second network element sets the request type to be the event-trigger request type, the first network element transmits the load information to the second network element when an event requested by the second network element occurs. Specifically, the second network element may request the first network element to transmit the load information of access network equipment to the second network element when the requested access network equipment is heavily overloaded, overloaded or lightly loaded. When the second network element sets the request type to be the periodic-trigger request type, the first network element periodically feeds back the load information to the second network element. The access network equipment information refers to an ID capable of uniquely identifying target access network equipment in the first network element, and the second network element may request for load information of one or more pieces of access network equipment connected with the first network element; therefore, the second network element may contain (an) ID(s) of one or more pieces of access network equipment in the access network equipment information; and in such a manner, the first network element receiving the access network equipment information may return load information of the access network equipment corresponding to the ID(s) to the second network element. When the first network element is a WLAN network element, the access network equipment may be an AP, an AC or the like; and when the first network element is a 3GPP network element, the access network equipment may be an eNB, an RN, a BSC or the like.

Step 602: the first network element constructs a load information response message according to the load information request message, and sends it to the second network element.

Here, the step that the first network element constructs the load information response message according to the load information request message includes that: the first network element analyzes the load information request message to obtain the request type and the access network equipment information; and the first network element searches for load information of one or more pieces of access network equipment corresponding to (an) access network equipment ID(s) according to the access network equipment ID(s) in the access network equipment information, and encapsulates the found load information of the one or more pieces of access network equipment into the load information response message.

After the load information response message is constructed, the first network element sends the load information response message to the second network element according to the request type in the load information request message. Specifically, if the request type in the load information request message is a periodic-trigger type, the first network element updates the load information of the access network equipment in real time according to a period requested by the second network element, and sends the latest load information of the access network equipment to the second network element; if the request type in the load information request message is the event-trigger type, when the event requested by the second network element occurs, the first network element updates the load information of the access network equipment in real time, and transmits all the load information to the second network element in a list manner; and when the access network equipment information sent by the second network element includes multiple access network equipment IDs, the first network element transmits the load information of multiple pieces of access network equipment corresponding to the multiple access network equipment IDs to the second network element in a list form.

The method further includes that: the first network element returns a load information constructing failure message to the second network element when failing to construct the load information, the load information constructing failure message including failure causes under different request types.

Here, there may be multiple causes for a load information constructing failure. For example, a network abnormality, memory overflow, a read-write abnormality and the like may cause a failure in load information acquisition, incorrect acquired load information or the like.

### Example 8

Fig. 7 is a flowchart of a load information transfer method according to example 8, and as shown in Fig. 7, the method includes the following step.

Step 701: a first network element constructs and sends a load information notification message to a second network element.

Specifically, the step that the first network element constructs and sends the load information notification message to the second network element includes that: the first network element constructs the load information notification message according to a preset rule, and sends the load information notification message to the second network element according to a preset sending strategy. The preset rule includes: an access network equipment ID. The first network element may send load information of access network equipment corresponding to the preset access network equipment ID to the second network element on the basis of the preset access network equipment ID in the preset rule. Here, one or more access network equipment IDs may be preset, so that the first network element may send load information of one or more pieces of access network equipment to the second network element. The preset sending strategy includes: event-trigger sending and periodic sending. The first network element may send the load information notification message to the second network element in an event triggering manner or a periodic triggering manner on the basis of the preset sending strategy. When the preset sending strategy is event-trigger sending, the first network element transmits the load information to the second network element when a preset event occurs. Specifically, it may be preset that the first network element transmits the load information of the access network equipment to the second network element when the access network equipment corresponding to the access network equipment ID is heavily overloaded, overloaded or lightly loaded. When the preset sending strategy is the periodic triggering manner, the first network element continuously sends the load information to the second network element according to a preset period. Both the preset rule and the preset sending strategy are set according to a practical requirement, specifically, the preset rule and the preset sending strategy may be set according to a local wireless resource management strategy, and the preset rule and the preset sending strategy may also be regulated according to a practical requirement.

It is to be noted that information interaction between the first network element and the second network element may be implemented by relaying of a core network, besides direct interaction among various kinds of information, in embodiment 1.

### Embodiment 2

The embodiment of the present disclosure provides a load information transfer system. The basic structure of the system is shown in Fig. 8, including: a first network element 81 and a second network element 82, wherein
the first network element 81 is configured to acquire load information of the first network element, and send the load information to the second network element 82 according to a request of the second network element 82, or actively send the load information to the second network element 82; and
the second network element 82 is configured to initiate a load information request to the first network element 81, and receive from the first network element 81, load information of the first network element 81, or directly receive load information of the first network element 81 from the first network element 81.

Here, the first network element 81 and the second network element 82 refer to two network elements under different radio access technology standards. The first network element 81 is a WLAN network element, specifically referring to an AP and an AC, or an independent equipment unit; the second network element 82 is a 3GPP network element, specifically being an eNB in an LTE system, an RNC in a UMTS, a BSC in a GSM, or an independent equipment unit. On the contrary, the first network element 81 surely may be a 3GPP network element, and the second network element 82 may be a WLAN network element.

Here, the load information refers to information capable of reflecting a system load condition of a network where the first network element 81 is located. For example, for a 3GPP network element, the load information in an LTE system may be an overall available resource level of an LTE cell, including a downlink overall available resource level and an uplink overall available resource level, wherein the overall available resource level mentioned here is represented by a cell capacity level value or a capacity value; the load information in a UTRAN system may be a load level of a UTRAN cell, including an uplink load level and a downlink load level, wherein the load level mentioned here may be represented by a cell capacity level value, a load value, a real-time service load value or a non-real-time service load value; and the load information in a GSM may be a load level of a GSM cell, including an uplink load level and a downlink load level, wherein the load level mentioned here may be represented by a cell capacity level value, a load value, a real-time service load value or a non-real-time service load value.

Load information of an AP in a WLAN may usually be represented by at least one of the following information: the number of STAs, a channel utilization and an access capability, wherein the number of the STAs refers to the number of STAs currently connected to a BSS; the channel utilization refers to a percentage of rush hours of a channel; and the access capability refers to remaining access time, and access capability information may be configured for an STA to select a proper AP to try to accept to guarantee a QoS requirement.

However, there has yet not been defined proper load information for cross-system interaction in a WLAN system; and therefore, new load information configured to implement cross-system interaction of a WLAN is defined in the embodiment of the present disclosure. Specifically, load information of the WLAN system is represented by an overall available resource utilization and/or load level indication information, wherein the overall available resource utilization is represented by a resource availability percentage; and the load level indication information may be represented by heavy overload indication information, overload indication information or light load indication information. During rough estimation of the load information of the WLAN system, the overall available resource utilization or the load level indication information may be adopted as the load information; and during accurate estimation of the load information of the WLAN system, the first network element 81 may send both the overall available resource utilization and the load level indication information to the second network element 82 as the load information.

Specifically, the second network element 82 is configured to construct a load information request message, and send the load information request message to the first network element 81, wherein the load information request message includes: source network element information, target network element information, a request type and access network equipment information.

The first network element 81 is configured to receive the load information request message sent by the second network element 82, construct a load information response message according to the load information request message, and send it to the second network element 82; and the load information response message includes own load information.

Here, the first network element 81 is configured to analyze the load information request message to obtain a request type and access network equipment information, search for load information of one or more pieces of access network equipment corresponding to (an) access network equipment ID(s) according to the access network equipment ID(s) in the access network equipment information, encapsulate the found load information of the one or more pieces of access network equipment in the load information response message, and send the load information response message to the second network element in an event triggering or periodic triggering manner according to the corresponding request type.

Here, the first network element 81 receives the load information request message sent by the second network element 82, wherein the load information request message includes: source network element information, target network element information, a request type and access network equipment information; the first network element 81 acquires the load information of the one or more pieces of access network equipment corresponding to the access network equipment ID(s) in the access network equipment information, encapsulates the load information of the one or more pieces of access network equipment into the load information response message, and sends the load information response message to the second network element 82 in the event triggering or periodic triggering manner according to the corresponding request type; the second network element 82 locally stores the load information of the first network element 81 contained in the load information response message, after receiving the load information response message, wherein the load information may be used for subsequent network resource optimization management or network connection strategy optimization between the first network element 81 and the second network element 82.

Preferably, the first network element 81 is further configured to send a load information constructing failure message to the second network element 82 when failing to acquire the load information, the load information constructing failure message including failure causes under different request types.

Here, there may be multiple causes for a load information constructing failure. For example, a network abnormality, memory overflow, a read-write abnormality and the like may cause a load information acquisition failure, incorrect acquired load information or the like.

More specifically, the first network element 81 is configured to construct a load information notification message according to a preset rule, and send the load information notification message to the second network element 82 according to a preset sending strategy; wherein the load information notification message includes load information of the first network element.

Here, the first network element 81 is configured to acquire the load information of the one or more pieces of access network equipment corresponding to the access network equipment ID(s), encapsulate the load information of the one or more pieces of access network equipment into the load information notification message, and send the load information notification message to the second network element 82 in the event triggering manner or the periodic triggering manner.

Here, the first network element 81 constructs the load information notification message according to the preset rule, and sends the load information notification message to the second network element 82 according to the preset sending strategy, the load information notification message including the load information of the one or more pieces of access network equipment. The preset rule includes: an access network equipment ID. The first network element 81 sends load information of access network equipment corresponding to the preset access network equipment ID to the second network element 82 on the basis of the preset access network equipment ID in the preset rule. Here, one or more access network equipment IDs may be preset, so that the first network element sends load information of one or more pieces of access network equipment to the second network element; wherein the preset sending strategy includes: event-trigger sending and periodic sending. The first network element 81 sends the load information notification message to the second network element 82 in an event triggering manner or a periodic triggering manner on the basis of the preset sending strategy. When the preset sending strategy is event-trigger sending, the first network element 81 transmits the load information to the second network element 82 when a preset event occurs; specifically, it may be preset that the first network element 81 transmits the load information of the access network equipment to the second network element 82 when the access network equipment corresponding to the access network equipment ID is heavily overloaded, overloaded or lightly loaded. When the preset sending strategy is the periodic triggering manner, the first network element 81 continuously feeds back the load information to the second network element 82 according to a preset period. Both the preset rule and the preset sending strategy are set according to a practical requirement, specifically, the preset rule and the preset sending strategy may be set according to a local wireless resource management strategy, and the preset rule and the preset sending strategy may also be regulated according to a practical requirement.

The second network element 82 locally stores the load information of the first network element 81 contained in the load information notification message, after receiving the load information notification message, wherein the load information may be used for subsequent network resource optimization management or network connection strategy optimization between the first network element 81 and the second network element 82.

Preferably, the system further includes: a core network 83, configured to receive a message sent to the second network element 82 by the first network element 81 and forward the message to the second network element 82, or configured to receive a message sent from the second network element 82 to the first network element 81 and forward the message to the first network element 81.

### Embodiment 3

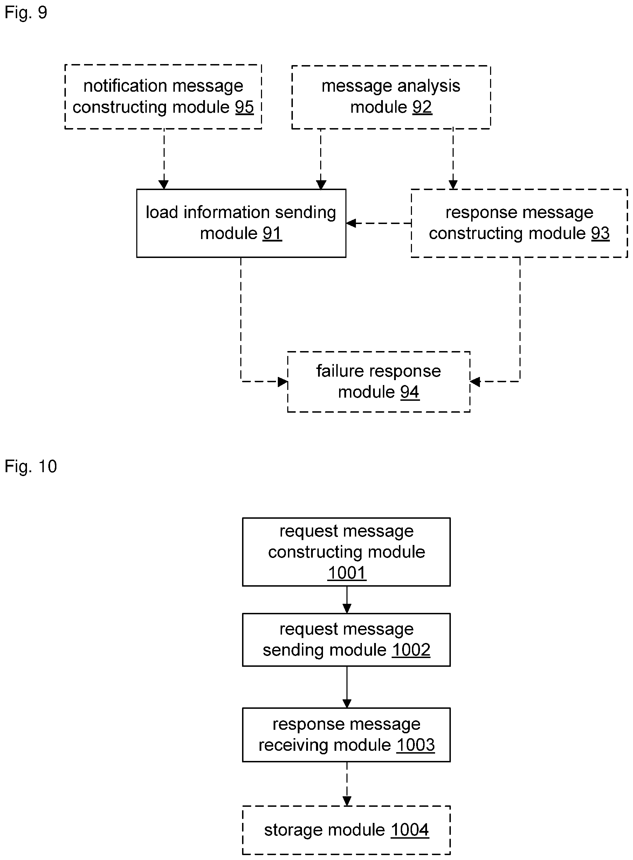

Embodiment 3 of the present disclosure provides a network element, which serves as a first network element. The basic structure of the network element is shown in Fig. 9, and the network element includes: a load information acquisition module and a load information sending module 91, wherein
the load information acquisition module is configured to acquire load information of the network element; and
the load information sending module 91 is configured to send the load information acquired by the load information acquisition module to a second network element according to a request of the second network element, or is configured to actively send the load information acquired by the load information acquisition module to the second network element, wherein the second network element is a 3GPP network element when the network element is a WLAN network element, and the second network element is a WLAN network element when the network element is a 3GPP network element.

Here, the network element and the second network element are network elements under different radio access technology standards. Specifically, the network element is a WLAN network element, referring to an AP, an AC, or an independent equipment unit; the second network element is a 3GPP network element, more specifically being an eNB in an LTE system, an RNC in a UMTS, a BSC in a GSM, or an independent equipment unit. Correspondingly, on the contrary, the network element may be a 3GPP network element, and the second network element may be a WLAN network element.

Preferably, the network element further includes a message analysis module 92 and a response message constructing module 93, wherein
the message analysis module 92 is configured to analyze a received load information request message and obtain a request type and access network equipment information, send the acquired request type to the load information sending module 91, and send the access network equipment information to the response message constructing module 93;
the response message constructing module 93 is configured to acquire load information of corresponding one or more pieces of access network equipment according to the access network equipment information sent by the message analysis module 92, and encapsulate the load information of the one or more pieces of access network equipment into a load information response message; and
the load information sending module 91 is configured to send the corresponding load information response message encapsulated by the response message constructing module 92 to the second network element in an event triggering or periodic triggering manner according to the request type sent by the message analysis module.

Preferably, the network element further includes a failure response module 94, configured to, when the load information acquisition module fails to acquire the load information, return a load information constructing failure message to the second network element, the load information constructing failure message including failure causes under different request types.

Here, there may be multiple causes for a load information constructing failure. For example, a network abnormality, memory overflow, a read-write abnormality and the like may cause a load information acquisition failure, incorrect acquired load information or the like.

Preferably, the network element further includes a notification message constructing module 95, configured to, before the load information sending module 91 actively sends the load information acquired by the load information acquisition module to the second network element, acquire the load information of the access network equipment according to a preset rule, and encapsulate the load information into a load information notification message.

Here, the preset rule includes: an access network equipment ID. The network element may send load information of access network equipment corresponding to the preset access network equipment ID to the second network element on the basis of the preset access network equipment ID in the preset rule.

Here, the operation that the load information sending module 91 actively sends the load information acquired by the load information acquisition module to the second network element includes that: the load information sending module 91 sends the load information notification message to the second network element according to a preset sending strategy.

Here, the load information acquisition module, message analysis module 92 and response message constructing module 93 in the network element may be implemented by a Central Processing Unit (CPU), or Digital Signal Processor (DSP) or Field-Programmable Gate Array (FPGA) in the network element during a practical application. The load information sending module 91 and the failure response module 94 in the network element may be implemented by a transmitter-receiver or a transceiver in the network element during the practical application.

### Example 9

Example 9 provides a network element, which serves as a second network element. The basic structure of the network element is shown in Fig. 10, and the network element includes: a request message sending module 1002 and a response message receiving module 1003, wherein
the request message sending module 1002 is configured to initiate a load information request to a first network element; and
the response message receiving module 1003 is configured to receive load information response message of the first network element from the first network element according to the load information request initiated to the first network element by the request message sending module 1002, or is configured to directly receive load information of the first network element from the first network element, wherein the first network element is a 3GPP network element when the network element is a WLAN network element, and the first network element is a WLAN network element when the network element is a 3GPP network element.

Here, the network element and the first network element are network elements under different radio access technology standards. Specifically, the network element may be a WLAN network element which may refer to an AP and an AC, or may be an independent equipment unit; the first network element may be a 3GPP network element, specifically being an eNB in an LTE system, an RNC in a UMTS, a BSC in a GSM, or may also be an independent equipment unit. On the contrary, the network element may be a 3GPP network element, and the first network element is a WLAN network element.

Specifically, a load information request message includes: source network element information, target network element information, a request type and access network equipment information, wherein the source network element information is one or more IDs capable of uniquely identifying the network element; and the target network element information refers to one or more IDs capable of uniquely identifying the first network element. The request type may be an event-trigger request type or a periodic-trigger request type; the access network equipment information refers to an ID capable of uniquely identifying target access network equipment in the first network element; and the access network equipment information contains (an) ID(s) of one or more pieces of access network equipment, so that the load information response message may contain load information of the one or more pieces of access network equipment.

Preferably, the network element further includes a request message constructing module 1001, configured to construct the load information request message, and send it to the first network element through the request message sending module 1002, wherein the load information request message includes: the source network element information, the target network element information, the request type and the access network equipment information.

Preferably, the network element further includes a storage module 1004, configured to locally store the load information in the load information response message received by the response message receiving module; and the load information may be configured for subsequent network resource optimization management or network connection strategy optimization between the network element and the first network element.

Here, the request message constructing module 1001 in the network element may be implemented by a CPU, or DSP or FPGA in the network element during a practical application; the request message sending module 1002 and the response message receiving module 1003 in the network element may be implemented by a transmitter-receiver or transceiver in the network element during the practical application; and the storage module 1004 in the network element may be implemented by a memory of the network element during the practical application.

It is to be noted that information interaction between the first network element and the second network element may be implemented by relaying of a core network, besides direct interaction among various kinds of information, in the preceding examples.

Those skilled in the art should know that the embodiments of the present disclosure may be embodied as a method, a network element or a computer program product. Therefore, the present disclosure may adopt a form of hardware embodiment, software embodiment and combined software and hardware embodiment. Moreover, the present disclosure may adopt a form of computer program product implemented on one or more computer-available storage media (including, but not limited to, a disk memory, a disk memory and an optical memory) including computer-available program codes.

The present disclosure is described with reference to flowcharts and/or block diagrams of the method, network element and computer program product according to the embodiments of the present disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or other programmable data processing equipment, so that a series of operating steps are executed on the computer or other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above are only the preferred embodiments of the present disclosure and not intended to limit the scope of protection of the present disclosure.

### INDUSTRIAL APPLICABILITY

According to the embodiments of the present disclosure, the first network element sends own load information to the second network element according to a request of the second network element or actively. In such a manner, load information interaction between network elements under different radio access technology standards is implemented under a condition of coexistence of Multi-RATs, so that comprehensive management over all network resources is implemented on the basis of an existing user terminal network selection method by combining comprehensive analysis about load information of each network element, the most proper access network is selected for a user terminal, a requirement of the user terminal on QoS is guaranteed, and moreover, the effect of optimizing an overall network load is achieved.

## Claims

1. A method for transferring load information, applied to a condition of coexistence of multiple radio access technologies, the method comprising:
acquiring (101), by a wireless local area network, WLAN, network element, load information of the WLAN network element; and
sending (102) the load information of the WLAN network element to a 3rd generation partnership project, 3GPP, network element according to a request of the 3GPP network element, or actively sending the load information of the WLAN network element to the 3GPP network element;
wherein the load information of the WLAN network element comprises: an overall available resource utilization and/or load level indication information, or
at least one of following information: the number of Stations, STAs, a channel utilization and an access capability;
wherein the method is **characterized by**:
sending, by the WLAN network element, load information of the WLAN network element to the 3GPP network element according to the request of the 3GPP network element comprises:
receiving (201), by the WLAN network element, a load information request message constructed by the 3GPP network element; and
constructing, by the WLAN network element, a load information response message according to the load information request message, and sending (202) the load information response message to the 3GPP network element, the load information response message comprising the load information of the WLAN network element;
wherein constructing, by the WLAN network element, the load information response message according to the load information request message, and sending (202) the load information response message to the 3GPP network element comprises:
analyzing, by the WLAN network element, the load information request message and obtaining a request type and access network equipment information; and
searching, by the WLAN network element, for load information of at least one piece of access network equipment corresponding to an access network equipment Identifier, ID, according to the access network equipment ID in the access network equipment information, encapsulating the found load information of the at least one piece of access network equipment in the load information response message, and sending the load information response message to the 3GPP network element in an event triggering manner or a periodic triggering manner according to the request type.

2. The method according to claim 1, wherein the load information request message comprises: source network element information, target network element information, the request type and the access network equipment information.

3. The method according to claim 1, wherein in a case where the WLAN network element actively sends the load information of the WLAN network element to the 3GPP network element, the actively sending comprises:
constructing, by the WLAN network element, a load information notification message according to a preset rule, and sending (301) the load information notification message to the 3GPP network element according to a preset sending strategy, the load information notification message comprising the load information of the WLAN network element,
wherein the preset rule comprises: the access network equipment ID; and the preset sending strategy comprises: event-trigger sending and periodic-trigger sending.

4. The method according to claim 3, wherein
constructing (202), by the WLAN network element, the load information notification message according to the preset rule comprises: acquiring, by the WLAN network element, load information of at least one piece of access network equipment corresponding to an access network equipment ID, and encapsulating the load information of the at least one piece of access network equipment in the load information notification message; and
sending, by the WLAN network element, the load information notification message to the 3GPP network element according to the preset sending strategy comprises: sending, by the WLAN network element, the load information notification message to the 3GPP network element in an event triggering manner or a periodic triggering manner.

5. A network element (81), serving as a wireless local area network, WLAN, network element, applied to a condition of coexistence of multiple radio access technologies and comprising: a load information acquisition module and a load information sending module (91), wherein
the load information acquisition module is configured to acquire load information of the WLAN network element; and
the load information sending module (91) is configured to send the load information of the WLAN network element acquired by the load information acquisition module to a 3rd generation partnership project, 3GPP, network element according to a request of the 3GPP network element, or is configured to actively send the load information acquired by the load information acquisition module to the 3GPP network element;
wherein the load information of the WLAN network element comprises: an overall available resource utilization and/or load level indication information, or
at least one of following information: the number of Stations, STAs, a channel utilization and an access capability;
wherein the network element is **characterized in that** in a case where the load information sending module (91) is configured to send the load information of the WLAN network element acquired by the load information acquisition module to the 3GPP network element according to the request of the 3GPP network element, the network element (81) further comprises: a message analysis module (92) and a response message constructing module (93), wherein
the message analysis module (92) is configured to analyze a received load information request message to obtain a request type and access network equipment information, send the acquired request type to the load information sending module (91), and send the access network equipment information to the response message constructing module (93);
the response message constructing module (93) is configured to acquire load information of one or more pieces of access network equipment according to the access network equipment information sent by the message analysis module (92), and to encapsulate the load information of the one or more pieces of access network equipment into a load information response message; and
the load information sending module (91) is configured to send the load information response message encapsulated by the response message constructing module (93) to the 3GPP network element in an event triggering manner or a periodic triggering manner according to the request type sent by the message analysis module (92); and
wherein the network element (81) further comprises: a notification message constructing module (95), configured to, before the load information sending module (91) actively sends the load information acquired by the load information acquisition module to the 3GPP network element, acquire load information of access network equipment according to an access network equipment Identifier, and to encapsulate the load information in a load information notification message.

6. The network element according to claim 5, wherein in a case where the load information sending module (91) is configured to actively send the load information acquired by the load information acquisition module to the 3GPP network element, the load information sending module (91) is configured to send the load information notification message to the 3GPP network element according to a preset sending strategy, wherein the preset sending strategy comprises: event-trigger sending and periodic-trigger sending.

7. A computer storage medium, having computer-executable instructions stored therein for executing the method for transferring load information according to any one of claims 1-4.

## Patentansprüche

1. Verfahren zum Übertragen von Lastinformationen, angewendet auf eine Koexistenzbedingung vielfacher Funkzugangstechnologien, das Verfahren umfassend:
Erfassen (101), durch ein drahtloses lokales Netzwerk, WLAN, von Lastinformationen des WLAN-Netzwerkelements; und
Senden (102) der Lastinformationen des WLAN-Netzwerkelements an ein 3rd Generation Partnership Project, 3GPP, gemäß einer Anforderung des 3GPP-Netzwerkelements oder aktives Senden der Lastinformationen des WLAN-Netzwerkelements an das 3GPP-Netzwerkelement;
wobei die Lastinformationen des WLAN-Netzwerkelements Folgendes umfassen: Informationen über Gesamtauslastung verfügbarer Ressourcen und/oder Lastgradangabe, oder
mindestens eine der folgenden Informationen: die Anzahl der Stationen, STAs, eine Kanalauslastung und eine Zugangsfähigkeit;
wobei das Verfahren **dadurch gekennzeichnet ist, dass**:
ein Senden, durch das WLAN-Netzwerkelement, von Lastinformationen des WLAN-Netzwerkelements an das 3GPP-Netzwerkelement gemäß der Anforderung des 3GPP-Netzwerkelements Folgendes umfasst:
Empfangen (201), durch das WLAN-Netzwerkelement, einer Lastinformation-Anforderungsnachricht, die von dem 3GPP-Netzwerkelement erstellt wird; und
Erstellen, durch das WLAN-Netzwerkelement, einer Lastinformation-Antwortnachricht gemäß der Lastinformation-Anforderungsnachricht, und Senden (202) der Lastinformation-Antwortnachricht an das 3GPP-Netzwerkelement, wobei die Lastinformation-Antwortnachricht die Lastinformationen des WLAN-Netzwerkelements umfasst;
wobei ein Erstellen, durch das WLAN-Netzwerkelement, der Lastinformation-Antwortnachricht gemäß der Lastinformation-Anforderungsnachricht und ein Senden (202) der Lastinformation-Antwortnachricht an das 3GPP-Netzwerkelement Folgendes umfasst:
Analysieren, durch das WLAN-Netzwerkelement, der Lastinformation-Anforderungsnachricht und Erlangen eines Anforderungstyps und von Zugangsnetzwerk-Ausrüstungsinformationen; und
Suchen, durch das WLAN-Netzwerkelement, nach Lastinformationen von mindestens einer Zugangsnetzwerk-Ausrüstung entsprechend einer Zugangsnetzwerk-Ausrüstungskennung, ID, gemäß der Zugangsnetzwerk-Ausrüstungskennung in den Zugangsnetzwerk-Ausrüstungsinformationen, Einkapseln der gefundenen Lastinformationen des mindestens einen Teils der Zugangsnetzwerk-Ausrüstung in der Lastinformation-Antwortnachricht, und Senden der Lastinformation-Antwortnachricht an das 3GPP-Netzwerkelement auf eine ereignisauslösende Weise oder eine periodische auslösende Weise gemäß dem Anforderungstyp.

2. Verfahren nach Anspruch 1, wobei die Lastinformation-Anforderungsnachricht Folgendes umfasst: Quellnetzwerkelement-Informationen, Zielnetzwerkelement-Informationen, den Anforderungstyp und die Zugangsnetzwerk-Ausrüstungsinformationen.

3. Verfahren nach Anspruch 1, wobei in einem Fall, in dem das WLAN-Netzwerkelement die Lastinformationen des WLAN-Netzwerkelements aktiv an das 3GPP-Netzwerkelement sendet, das aktive Senden Folgendes umfasst:
Erstellen einer Lastinformation-Benachrichtigungsnachricht durch das WLAN-Netzwerkelement gemäß einer voreingestellten Regel und Senden (301) der Lastinformation-Benachrichtigungsnachricht an das 3GPP-Netzwerkelement gemäß einer voreingestellten Sendestrategie, die Lastinformation-Benachrichtigungsnachricht umfassend die Lastinformationen des WLAN-Netzwerkelements,
wobei die voreingestellte Regel Folgendes umfasst: die Zugangsnetzwerk-Ausrüstungs-ID; und die voreingestellte Sendestrategie Folgendes umfasst: ereignisauslösendes Senden und periodisch ausgelöstes Senden.

4. Verfahren nach Anspruch 3, wobei
ein Erstellen (202) der Lastinformation-Benachrichtigungsnachricht durch das WLAN-Netzwerkelement gemäß der voreingestellten Regel Folgendes umfasst: Erfassen, durch das WLAN-Netzwerkelement, von Lastinformationen des mindestens eines Teils der Zugangsnetzwerk-Ausrüstung entsprechend einer Zugangsnetzwerk-Ausrüstungs-ID, und Einkapseln der Lastinformationen der mindestens einen Zugangsnetzwerk-Ausrüstung in der Lastinformation-Benachrichtigungsnachricht; und
ein Senden, durch das WLAN-Netzwerkelement, der Lastinformation-Benachrichtigungsnachricht an das 3GPP-Netzwerkelement gemäß der voreingestellten Sendestrategie Folgendes umfasst: Senden, durch das WLAN-Netzwerkelement, der Lastinformation-Benachrichtigungsnachricht an das 3GPP-Netzwerkelement auf eine ereignisauslösende Weise oder auf eine periodische auslösende Weise.

5. Netzwerkelement (81), das als ein Netzwerkelement eines drahtlosen lokalen Netzwerks, WLAN, dient, das auf eine Koexistenzbedingung vielfacher Funkzugangstechnologien angewendet wird und umfassend: ein Lastinformation-Erfassungsmodul und ein Lastinformation-Sendemodul (91), wobei
das Lastinformation-Erfassungsmodul konfiguriert ist, um Lastinformationen des WLAN-Netzwerkelements zu erfassen; und
das Lastinformations-Sendemodul (91) konfiguriert ist, um die von dem Lastinformation-Erfassungsmodul erfassten Lastinformationen des WLAN-Netzwerkelements an ein 3rd Generation Partnership Project, 3GPP, gemäß einer Anforderung des 3GPP-Netzwerkelements zu senden, oder konfiguriert ist, um die von dem Lastinformation-Erfassungsmodul erfassten Lastinformationen aktiv an das 3GPP-Netzwerkelement zu senden;
wobei die Lastinformationen des WLAN-Netzwerkelements Folgendes umfassen: Informationen über Gesamtauslastung verfügbarer Ressourcen und/oder Lastgradangabe, oder
mindestens eine der folgenden Informationen: die Anzahl der Stationen, STAs, eine Kanalauslastung und eine Zugangsfähigkeit;
wobei das Netzwerkelement **dadurch gekennzeichnet ist, dass** in einem Fall, in dem das Lastinformation-Sendemodul (91) konfiguriert ist, um die Lastinformationen des WLAN-Netzwerkelements, die durch das Lastinformations-Erfassungsmodul erfasst werden, gemäß der Anforderung des 3GPP-Netzwerkelements an das 3GPP-Netzwerkelement zu senden, das Netzwerkelement (81) ferner Folgendes umfasst: ein Nachrichtenanalysemodul (92) und ein Antwortnachrichten-Erstellungsmodul (93), wobei
das Nachrichtenanalysemodul (92) konfiguriert ist, um eine empfangene Lastinformation-Anforderungsnachricht zu analysieren, um einen Anforderungstyp und Zugangsnetzwerk-Ausrüstungsinformationen zu erlangen, den erhaltenen Anforderungstyp an das Lastinformation-Sendemodul (91) zu senden und die Zugangsnetzwerk-Ausrüstungsinformationen an das Antwortnachricht-Erstellungsmodul (93) zu senden;
das Antwortnachricht-Erstellungsmodul (93) konfiguriert ist, um Lastinformationen einer oder mehrerer Zugangsnetzwerk-Ausrüstungen gemäß den von dem Nachrichtenanalysemodul (92) gesendeten Zugangsnetzwerk-Ausrüstungsinformationen zu erfassen und die Lastinformationen der einen oder mehreren Teilen von Zugangsnetzwerk-Ausrüstungen in eine Lastinformation-Antwortnachricht einzukapseln; und
das Lastinformation-Sendemodul (91) konfiguriert ist, um die Lastinformation-Antwortnachricht, die von dem Antwortnachricht-Erstellungsmodul (93) eingekapselt ist, an das 3GPP-Netzwerkelement auf eine ereignisauslösende Weise oder auf eine periodische auslösende Weise entsprechend dem vom Nachrichtenanalysemodul (92) gesendeten Anforderungstyp zu senden;und
wobei das Netzwerkelement (81) ferner Folgendes umfasst: ein Benachrichtigungsnachricht-Erstellungsmodul (95), das konfiguriert ist, um, bevor das Lastinformation-Sendemodul (91) die durch das Lastinformation-Erfassungsmodul erfassten Lastinformationen aktiv an das 3GPP-Netzwerkelement sendet, Lastinformationen von Zugangsnetzwerk-Ausrüstung gemäß einer Zugangsnetzwerk-Ausrüstungskennung zu erfassen und die Lastinformationen in eine Lastinformation-Benachrichtigungsnachricht einzukapseln.

6. Netzwerkelement nach Anspruch 5, wobei in einem Fall, in dem das Lastinformation-Sendemodul (91) konfiguriert ist, um die von dem Lastinformation-Erfassungsmodul erfassten Lastinformationen aktiv an das 3GPP-Netzwerkelement zu senden, das Lastinformation-Sendemodul (91) konfiguriert ist, um die Lastinformation-Benachrichtigungsnachricht gemäß einer voreingestellten Sendestrategie an das 3GPP-Netzwerkelement zu senden, wobei die voreingestellte Sendestrategie Folgendes umfasst: ereignisauslösendes Senden und periodisches auslösendes Senden.

7. Computerspeichermedium, auf dem computerausführbare Anweisungen zum Ausführen des Verfahrens zum Übertragen von Lastinformationen nach einem der Ansprüche 1-4 gespeichert sind.

## Revendications

1. Procédé pour transférer des informations de charge, appliqué à une condition de coexistence de multiples technologies d'accès radio, le procédé comprenant :
l'acquisition (101), par un élément de réseau local sans fil, WLAN, d'informations de charge de l'élément de réseau WLAN ; et
l'envoi (102) les informations de charge de l'élément de réseau WLAN à un élément de réseau 3GPP (3rd génération partnership project) selon une demande de l'élément de réseau 3GPP, ou l'envoi de façon active des informations de charge de l'élément de réseau WLAN à l'élément de réseau 3GPP ;
dans lequel les informations de charge de l'élément de réseau WLAN comprennent : une information d'indication de l'utilisation globale des ressources disponibles et/ou du niveau de charge, ou
au moins l'une des informations suivantes : le nombre de stations, STA, une utilisation du canal et une capacité d'accès ;
dans lequel le procédé est **caractérisé par** :
l'envoi, par l'élément de réseau WLAN, d'informations de charge de l'élément de réseau WLAN à l'élément de réseau 3GPP selon la demande de l'élément de réseau 3GPP comprend :
la réception (201), par l'élément de réseau WLAN, d'un message de demande d'informations de charge construit par l'élément de réseau 3GPP ; et
la construction, par l'élément de réseau WLAN, d'un message de réponse aux informations de charge selon le message de demande d'informations de charge, et l'envoi (202) du message de réponse aux informations de charge à l'élément de réseau 3GPP, le message de réponse aux informations de charge comprenant les informations de charge de l'élément de réseau WLAN ;
dans lequel la construction, par l'élément de réseau WLAN, du message de réponse d'informations de charge selon le message de demande d'informations de charge, et l'envoi (202) du message de réponse d'informations de charge à l'élément de réseau 3GPP comprend :
l'analyse, par l'élément de réseau WLAN, du message de demande d'informations de charge et l'obtention d'un type de demande et d'informations sur l'équipement de réseau d'accès ; et
la recherche, par l'élément de réseau WLAN, d'informations de charge d'au moins un équipement de réseau d'accès correspondant à un identifiant d'équipement de réseau d'accès, ID, selon l'identifiant d'équipement de réseau d'accès dans les informations d'équipement de réseau d'accès, l'encapsulation des informations de charge trouvées de l'au moins un équipement de réseau d'accès dans le message de réponse d'informations de charge, et l'envoi du message de réponse d'informations de charge à l'élément de réseau 3GPP d'une manière à déclenchement par événement ou d'une manière à déclenchement périodique selon le type de demande.

2. Procédé selon la revendication 1, dans lequel le message de demande d'informations de charge comprend : des informations d'élément de réseau source, des informations d'élément de réseau cible, le type de demande et les informations d'équipement de réseau d'accès.

3. Procédé selon la revendication 1, dans lequel dans un cas où l'élément de réseau WLAN envoie activement les informations de charge de l'élément de réseau WLAN à l'élément de réseau 3GPP, l'envoi actif comprend :
la construction, par l'élément de réseau WLAN, d'un message de notification d'informations de charge selon une règle prédéfinie, et l'envoi (301) du message de notification d'informations de charge à l'élément de réseau 3GPP selon une stratégie d'envoi prédéfinie, le message de notification d'informations de charge comprenant les informations de charge de l'élément de réseau WLAN,
dans lequel la règle prédéfinie comprend : l'ID de l'équipement du réseau d'accès ; et la stratégie d'envoi prédéfinie comprend : l'envoi à déclenchement par événement et l'envoi à déclenchement périodique.

4. Procédé selon la revendication 3, dans lequel,
la construction (202), par l'élément de réseau WLAN, du message de notification d'informations de charge selon la règle prédéfinie comprend : l'acquisition, par l'élément de réseau WLAN, d'informations de charge d'au moins un équipement de réseau d'accès correspondant à un ID d'équipement de réseau d'accès, et l'encapsulation des informations de charge de l'au moins un équipement de réseau d'accès dans le message de notification d'informations de charge ; et
l'envoi, par l'élément de réseau WLAN, du message de notification d'informations de charge à l'élément de réseau 3GPP selon la stratégie d'envoi prédéfinie comprend : l'envoi, par l'élément de réseau WLAN, du message de notification d'informations de charge à l'élément de réseau 3GPP d'une manière à déclenchement par événement ou d'une manière à déclenchement périodiquement.

5. Élément de réseau (81), servant d'élément de réseau de réseau local sans fil, WLAN, appliqué à une condition de coexistence de multiples technologies d'accès radio et comprenant : un module d'acquisition d'informations de charge et un module d'envoi d'informations de charge (91), dans lequel
le module d'acquisition d'informations de charge est configuré pour acquérir des informations de charge de l'élément de réseau WLAN ; et
le module d'envoi d'informations de charge (91) est configuré pour envoyer les informations de charge de l'élément de réseau WLAN acquises par le module d'acquisition d'informations de charge à un élément de réseau 3GPP (3rd génération partnership project) selon une demande de l'élément de réseau 3GPP, ou est configuré pour envoyer activement les informations de charge acquises par le module d'acquisition d'informations de charge à l'élément de réseau 3GPP ;
dans lequel les informations de charge de l'élément de réseau WLAN comprennent : une information d'indication de l'utilisation globale des ressources disponibles et/ou du niveau de charge, ou
au moins l'une des informations suivantes : le nombre de stations, STA, une utilisation du canal et une capacité d'accès ;
dans lequel l'élément de réseau est **caractérisé en ce que** dans un cas où le module d'envoi d'informations de charge (91) est configuré pour envoyer les informations de charge de l'élément de réseau WLAN acquises par le module d'acquisition d'informations de charge à l'élément de réseau 3GPP selon la demande de l'élément de réseau 3GPP, l'élément de réseau (81) comprend en outre : un module d'analyse de message (92) et un module de construction de message de réponse (93), dans lequel
le module d'analyse de message (92) est configuré pour analyser un message de demande d'informations de charge reçu pour obtenir un type de demande et des informations d'équipement de réseau d'accès, envoyer le type de demande acquis au module d'envoi d'informations de charge (91), et envoyer les informations d'équipement de réseau d'accès au module de construction de message de réponse (93) ;
le module de construction de message de réponse (93) est configuré pour acquérir des informations de charge d'un ou plusieurs équipements de réseau d'accès selon les informations d'équipement de réseau d'accès envoyées par le module d'analyse de message (92), et pour encapsuler les informations de charge du ou des équipements de réseau d'accès dans un message de réponse d'informations de charge ; et
le module d'envoi d'informations de charge (91) est configuré pour envoyer le message de réponse d'informations de charge encapsulé par le module de construction de message de réponse (93) à l'élément de réseau 3GPP d'une manière à déclenchement par événement ou d'une manière à déclenchement périodique selon le type de demande envoyée par le module d'analyse de message (92) ; et
dans lequel l'élément de réseau (81) comprend en outre : un module de construction de message de notification (95), configuré pour, avant que le module d'envoi d'informations de charge (91) n'envoie activement les informations de charge acquises par le module d'acquisition d'informations de charge à l'élément de réseau 3GPP, acquérir des informations de charge d'un équipement de réseau d'accès selon un identifiant d'équipement de réseau d'accès, et pour encapsuler les informations de charge dans un message de notification d'informations de charge.

6. Élément de réseau selon la revendication 5, dans lequel dans un cas où le module d'envoi d'informations de charge (91) est configuré pour envoyer activement les informations de charge acquises par le module d'acquisition d'informations de charge à l'élément de réseau 3GPP, le module d'envoi d'informations de charge (91) est configuré pour envoyer le message de notification d'informations de charge à l'élément de réseau 3GPP selon une stratégie d'envoi prédéfinie, dans lequel la stratégie d'envoi prédéfinie comprend : un envoi à déclenchement par événement et un envoi à déclenchement périodique.

7. Support de stockage informatique, ayant des instructions exécutables par ordinateur stockées à l'intérieur pour exécuter le procédé de transfert d'informations de charge selon l'une quelconque des revendications 1 à 4.
